# DEMANDE DE BREVET EUROPEEN

(11) **EP 0 810 075 A1**
(43) Date de publication de la demande: **03.12.1997**
(21) Numéro de dépôt: 97401173.6
(22) Date de dépôt: 28.05.1997
(51) Int. Cl.: B29C 45/17

(54) **Dispositif de pilotage du fonctionnement de moyens de commande du profil d'une courbe de pression d'un fluide injecté dans un moule d'injection assistée par fluide**

(30) Priorité: 30.05.1996 FR 9606675
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Barry, Lionel, 94220 Charenton-le-Pont (FR); Verghade, Jean-Marie, 94410 St Maurice (FR)
(74) Mandataire: Vesin, Jacques

(57) **Abrégé**

Ce dispositif de pilotage du fonctionnement de moyens de commande du profil d'une courbe de pression d'un fluide injecté dans un moule ou dans une partie d'un moule d'injection assistée par fluide (3), à partir d'une source de fluide sous pression (1), du type comportant une unité de traitement d'informations (4) de pilotage du fonctionnement de moyens de commande (2) du profil de pression, à partir d'une courbe de pression de référence (5), est caractérisé en ce que l'unité de traitement d'informations (4) comporte des moyens (4a) de régulation en boucle fermée du fonctionnement des moyens de commande (2), recevant en entrée, une mesure de pression délivrée par un capteur (6) implanté en sortie de ces moyens de commande (2).

## Description

La présente invention concerne un dispositif de de pilotage du fonctionnement de moyens de commande du profil d'une courbe de pression d'un fluide injecté dans un moule ou dans une partie d'un moule d'injection assistée par fluide.

On connaît déjà dans l'état de la technique, un certain nombre de dispositifs de ce type dans lesquels les moyens de commande sont associés à une source de fluide sous pression pour commander la pression de fluide en sortie de celle-ci.

Dans ces dispositifs, il est alors prévu une unité de traitement d'informations de pilotage du fonctionnement de ces moyens de commande à partir d'une courbe de pression de référence, cette unité de traitement étant adaptée pour contrôler le fonctionnement de cette source afin d'obtenir une courbe de pression correspondante en sortie de celle-ci.

C'est ainsi par exemple que dans le document EP-O 310 914, on a décrit un dispositif de ce type dans lequel les moyens de commande comprennent plusieurs circuits en parallèle, munis chacun d'une électrovanne fonctionnant en tout ou rien associée à un détendeur, et disposés en série avec le reste de la source.

L'unité de traitement d'informations est alors adaptée pour piloter une ou plusieurs des électrovannes afin d'obtenir en sortie, une courbe de pression correspondante.

Ce dispositif fonctionne par paliers de pression, chaque circuit délivrant une pression fixe établie par calage manuel du détendeur.

On conçoit cependant qu'une telle structure présente un certain nombre d'inconvénients, notamment au niveau de la qualité, de la précision et de la continuité de la régulation de pression obtenue en raison de ce fonctionnement par paliers.

Le but de l'invention est donc de résoudre ces problèmes.

A cet effet, l'invention a pour objet un dispositif de pilotage du fonctionnement de moyens de commande du profil d'une courbe de pression d'un fluide injecté dans un moule ou dans une partie d'un moule d'injection assistée par fluide, à partir d'une source de fluide sous pression, du type comportant une unité de traitement d'informations de pilotage du fonctionnement de moyens de commande du profil de pression, à partir d'une courbe de pression de référence, caractérisé en ce que l'unité de traitement d'informations comporte des moyens de régulation en boucle fermée du fonctionnement des moyens de commande, recevant en entrée, une mesure de pression délivrée par un capteur implanté en sortie de ces moyens de commande.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un exemple de réalisation d'un dispositif de pilotage selon l'invention; et
- la Fig.2 représente un schéma synoptique illustrant la structure générale d'un exemple de réalisation d'une électrovanne proportionnelle entrant dans la constitution d'un tel dispositif.

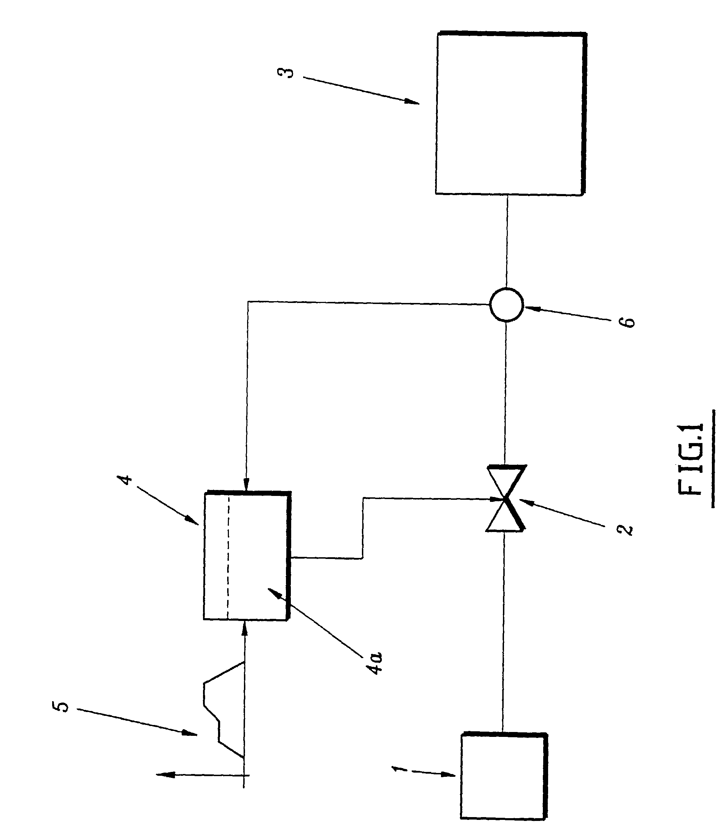

On reconnaît en effet sur la figure 1, un dispositif de pilotage du fonctionnement de moyens de commande du profil d'une courbe de pression d'un fluide injecté dans un moule ou dans une partie d'un moule d'injection assistée par fluide.

Ce fluide est délivré par une source de fluide sous pression, désignée par la référence générale 1 sur cette figure.

Des moyens de commande du profil de la courbe de pression à partir d'une courbe de pression de référence, sont désignés par la référence générale 2 sur cette figure et sont implantés entre cette source de fluide sous pression et le moule ou la partie de moule correspondante, permettant la fabrication de pièces par injection assistée par fluide.

Cette partie de moule est désignée par la référence générale 3 sur cette figure et présente une structure bien connue dans l'état de la technique, de sorte que l'on ne la décrira pas plus en détail par la suite.

Les moyens de commande 2 comprennent quant à eux par exemple une électrovanne proportionnelle qui sera décrite plus en détail par la suite, implantée entre la source de fluide sous pression 1 et le moule 3 et dont le fonctionnement est piloté par une unité de traitement d'informations désignée par la référence générale 4 sur cette figure, à partir d'une courbe de pression de référence, désignée par la référence générale 5 sur cette figure, entrée et stockée dans cette unité de traitement d'informations.

Ce pilotage de l'électrovanne permet alors de commander la courbe de pression de fluide injecté dans le moule.

De plus, cette unité de traitement d'informations 4 peut également comporter des moyens 4a de régulation en boucle fermée, du fonctionnement de l'électrovanne proportionnelle 2, recevant en entrée, une mesure de pression délivrée par un capteur de pression 6 implanté en sortie de cette électrovanne proportionnelle 2.

Ce capteur de pression 6 peut également présenter n'importe quelle structure appropriée connue dans l'état de la technique et est adapté pour entrer dans l'unité de traitement d'informations 4 et plus particulièrement dans les moyens 4a de régulation en boucle fermée du fonctionnement de cette électrovanne 2, une valeur représentative de la pression de fluide en sortie de ceux-ci, c'est-à-dire dans le moule ou dans la partie de moule correspondante.

Bien entendu différents modes de réalisation de ces moyens de régulation en boucle fermée peuvent être envisagés et ceux-ci peuvent par exemple comporter un régulateur PID éventuellement auto-adaptatif ou tout autre type de régulateur connu dans l'état de la technique.

Ce régulateur peut se présenter sous la forme d'un régulateur à composants discrets ou programmé dans l'unité de traitement d'informations, celle-ci comportant tout calculateur programmable approprié connu dans l'état de la technique.

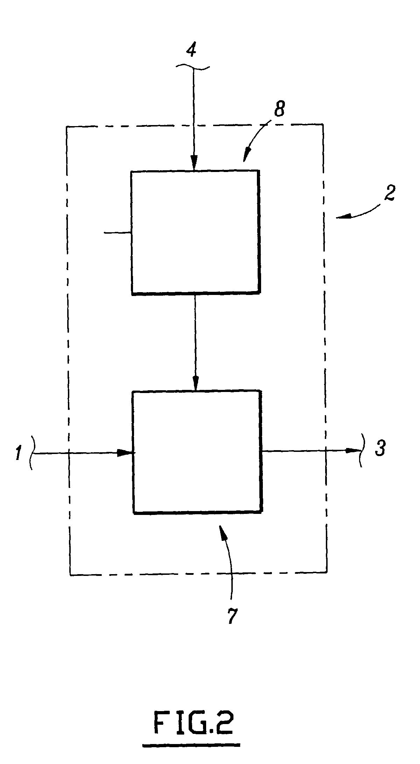

Sur la figure 2, on a représenté un exemple de réalisation possible de l'électrovanne proportionnelle 2, implantée entre la source 1 et le moule 3 et recevant un signal de commande de l'unité de traitement d'informations 4.

En fait, cette électrovanne proportionnelle 2 peut comporter une vanne multiplicatrice 7 de type classique, pilotée par un servo-distributeur 8 de type classique, recevant le signal de commande de l'unité de traitement d'informations 4.

Ce servo-distributeur 8 permet de convertir le signal électrique reçu de l'unité de traitement d'informations 4 en un signal de pression de pilotage correspondant de la vanne multiplicatrice 7, afin de commander la pression de fluide en sortie de celle-ci, c'est-à-dire celle du fluide injecté dans le moule 3.

En effet, la vanne multiplicatrice 7 permet de convertir le signal de commande à basse pression issu du servo-distributeur 8 en un signal de sortie à haute pression à partir de la source 1, celui-ci étant ensuite injecté dans le moule 3.

On conçoit alors que cette structure de dispositif présente un certain nombre d'avantages par rapport aux structures de l'état de la technique, dans la mesure où elle permet d'améliorer la qualité et la précision de la régulation de pression dans le moule ou la partie de moule correspondante par utilisation de cette électrovanne proportionnelle et de ces moyens de régulation en boucle fermée.

Ceux-ci permettent en effet d'ajuster en continu et très rapidement la courbe de pression du fluide injecté dans le moule.

## Revendications

1. Dispositif de pilotage du fonctionnement de moyens de commande du profil d'une courbe de pression d'un fluide injecté dans un moule ou dans une partie d'un moule d'injection assistée par fluide (3), à partir d'une source de fluide sous pression (1), du type comportant une unité de traitement d'informations (4) de pilotage du fonctionnement de moyens de commande (2) du profil de pression, à partir d'une courbe de pression de référence (5), caractérisé en ce que l'unité de traitement d'informations (4) comporte des moyens (4a) de régulation en boucle fermée du fonctionnement des moyens de commande (2), recevant en entrée, une mesure de pression délivrée par un capteur (6) implanté en sortie de ces moyens de commande (2).

2. Dispositif selon la revendication 1, caractérisé en ce que les moyens de commande (2) comprennent une électrovanne proportionnelle implantée entre la source (1) et le moule (3).

3. Dispositif selon la revendication 2, caractérisé en ce que les moyens (4a) de régulation en boucle fermée comportent un régulateur PID.

4. Dispositif selon l'une quelconque des revendications 2 ou 3, caractérisé en ce que l'électrovanne proportionnelle (2) comporte en outre une vanne multiplicatrice (7) disposée entre la source (1) et le moule (3) et pilotée par un servo-distributeur (8) dont le fonctionnement est commandé par l'unité de traitement d'informations (4).
